# EUROPÄISCHE PATENTSCHRIFT

(11) **EP 0 973 608 B1**
(45) Veröffentlichungstag und Bekanntmachung des Hinweises auf die Patenterteilung: **23.01.2002**
(21) Anmeldenummer: 98921411.9
(22) Anmeldetag: 01.04.1998
(51) Int. Cl.: B01J 20/32, G01N 30/48, B01J 39/12

(54) **NUKLEOTIDHALTIGES SORBENS FÜR DIE AFFINITÄTSCHROMATOGRAPHIE**
SORPTION AGENT CONTAINING NUCLEOTIDE, FOR AFFINITY CHROMATOGRAPHY
SORBANT NUCLEOTIDIQUE POUR CHROMATOGRAPHIE D'AFFINITE

(30) Priorität: 12.04.1997 DE 19715331
(43) Veröffentlichungstag der Anmeldung: 26.01.2000
(73) Patentinhaber: MERCK PATENT GmbH, 64271 Darmstadt (DE)
(72) Erfinder: MORR, Michael, D-38302 Wolfenbüttel (DE); MÜLLER, Egbert, D-64390 Erzhausen (DE)
(86) Internationale Anmeldenummer: EP9801880
(87) Internationale Veröffentlichungsnummer: WO9846350

(56) Entgegenhaltungen:
- WO-A-95/09694
- US-A- 5 436 327

## Beschreibung

Die Erfindung betrifft alkalistabile Sorbenzien für die Affinitätschromatographie, die Nucleotide als Affinitätsliganden enthalten, sowie phosphorsäurehaltige Zwischenverbindungen für ihre Herstellung und deren Verwendung. Die erfindungsgemäßen Sorbenzien sind stabil gegen einmolare Alkalilösung, gegen einmolare Mineralsäure, sowie auch stabil gegenüber sauren Phosphatasen z.B. aus Weizenkeimen oder Kartoffeln.

Aus DE 43 33 674 /WO 95/09 694 sind Sorbenzien für die Affinitätschromatographie, die Nucleotide als Affinitätsliganden enthalten, sowie phosphorsäurehaltige Zwischenverbindungen bekannt. Diese Druckschrift offenbart auch den technischen Hintergrund für die Verwendung derartiger Sorbenzien.

Jedoch sind die in DE 43 33 674 / WO 95/09 694 offenbarten Sorbentien nicht gegen Alkali stabil. Es besteht also die Aufgabe, diese an sich vorteilhaften Sorbenzien zu verändern, damit ihre Stabilität verbessert wird.

Es wurde gefunden, daß man Sorbentien mit verbesserter Stabilität erhält, wenn man die aus DE 43 10 964 / EP 0 565 978 bekannten epoxy-aktivierten Trägermaterialien zunächst mit einem Alkylendiol zu einem Hydroxyalkyletherderivat umsetzt, anschließend die verbleibende Hydroxylgruppe nach an sich bekannten Verfahren phosphoryliert und schließlich an die Phosphorsäuregruppe einen Nucleotidrest bindet. Derartig erhältliche Sorbentien sind stabil gegen einmolare Natronlauge oder Salzsäure; sie werden außerdem nicht von sauren Phosphatasen aus Weizenkeimen oder Kartoffeln gespalten.

Gegenstand der Erfindung sind Trennmaterialien für die Affinitätschromatographie auf der Grundlage von hydroxylgruppenhaltigen Basisträgern, auf deren Oberflächen Polymere kovalent gebunden sind, wobei
a) der Basisträger aliphatische Hydroxylgruppen enthält,
b) die kovalentgebundenen Polymeren über eine endständige Monomereinheit an den Basisträger gebunden sind,
und wobei die linearen Polymeren Monomereinheiten der Formel I enthalten, 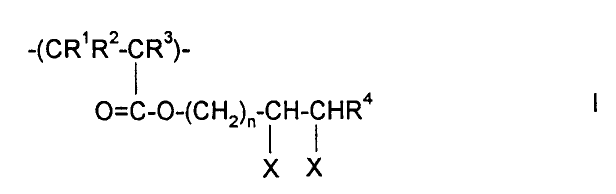 worin
- R¹, R² und R³: unabhängig voneinander H oder CH₃,
- R⁴: H, C₁-C₅-Alkyl oder C₆-C₁₂-Aryl,
- n: eine ganze Zahl zwischen 1 und 5
und
einer der Reste X OH und der andere Rest X einen nucleosidhaltigen Rest, der über eine gerade oder verzweigte C₂ - C₈ - Alkylengruppe gebunden ist,
bedeuten.

In bevorzugten Ausführungsformen bedeutet der nucleosidhaltige Rest X, der über eine Alkylengruppe gebunden ist, einen Rest nach Formel II, III oder IV.

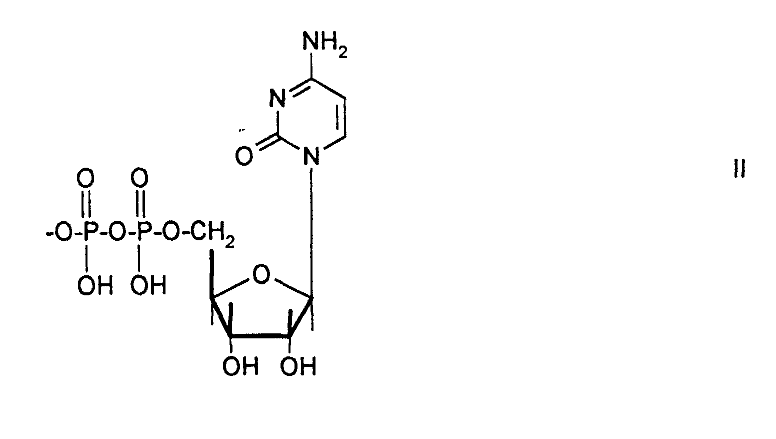

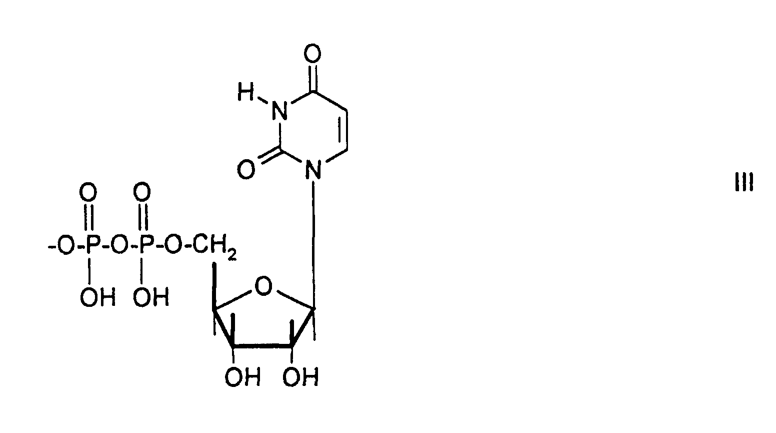

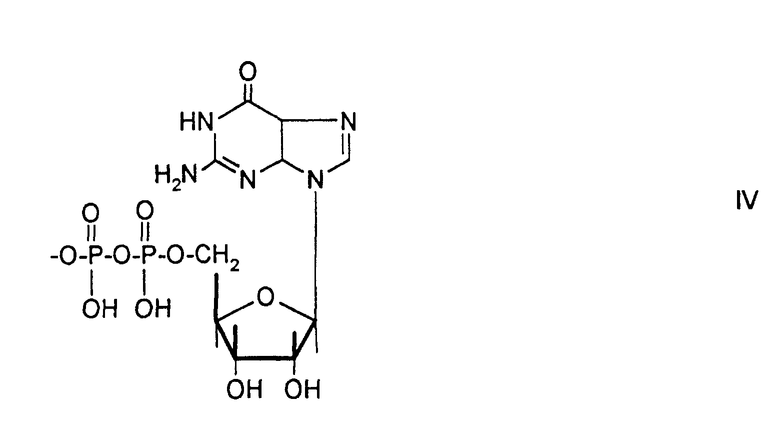

Gegenstand der Erfindung ist ferner die Verwendung dieser Trennmaterialien für die Affinitätschromatographie.

Gegenstand der Erfindung sind auch Verfahren zur Herstellung der genannten Trennmaterialien mit folgenden Verfahrensschritten:
a) Pfropfpolymerisation von Monomeren der Formel V auf einen hydroxylgruppenhaltigen Basisträger unter Beteiligung von Cer-(IV)-Ionen, 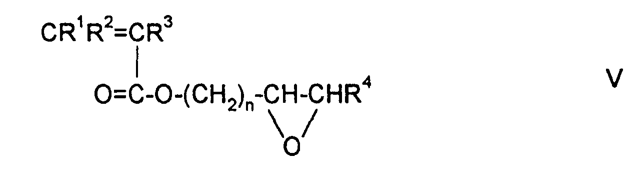 worin
   - R¹, R² und R³: unabhängig voneinander H oder CH₃,
   - R⁴: H, C₁-C₅-Alkyl oder C₆-C₁₂-Aryl
   und
   - n: eine ganze Zahl zwischen 1 und 5
   bedeuten.
b) Umsetzung des epoxidgruppenhaltigen Trägers aus Verfahrensschritt a) mit einem Alkylendiol;
c) Phosphorylierung der Hydroxylgruppe, die in Verfahrensschritt b) eingeführt wurde;
d) Einführung von nukleosidhaltigen Resten in das in Schritt c) erhaltene Produkt.

Gegenstand der Erfindung sind ferner Phosphorsäureesterderivate von gepfropften Polymeren auf der Grundlage von hydroxylgruppenhaltigen Basisträgern, auf deren Oberflächen Polymere kovalent gebunden sind, wobei
a) der Basisträger aliphatische Hydroxylgruppen enthält,
b) die kovalentgebundenen Polymeren über eine endständige Monomereinheit an den Basisträger gebunden sind,
   und wobei die linearen Polymeren Monomereinheiten der Formel VI enthalten, 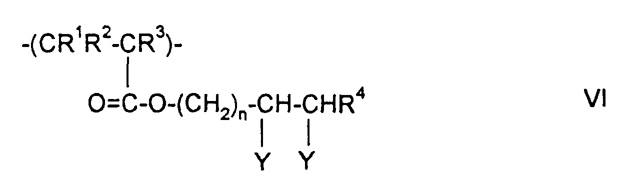 worin
   - R¹, R² und R³: unabhängig voneinander H oder CH₃,
   - R⁴: H, C₁-C₅-Alkyl oder C₆-C₁₂-Aryl,
   - n: eine ganze Zahl zwischen 1 und 5
   und
einer der Reste Y OH und der andere Rest Y eine über eine Alkylengruppe gebundene PO₄H₂ -Gruppe bedeuten.

Gegenstand der Erfindung sind schließlich die Verwendung dieser Phosphorsäurederivate für die Herstellung der erfindungsgemäßen Trennmaterialien und als Kationenaustauscher für die Flüssigkeitschromatographie.

Geeignete Reaktionen für die genannten Umsetzungen sind dem Fachmann bekannt; folgende Umsetzungen sind beispielsweise möglich: Die epoxy-aktivierten Trägermaterialien werden mit einem Alkylendiol, vorzugsweise Hexan-1,6-diol in Gegenwart von katalytischen Mengen Bortrifluoridetherat (BF₃ . Et₂ O) verethert. Anschließend wird die primäre Hydroxylgruppe phosphoryliert, beispielsweise nach K. Kusashio und M. Yoshikawa (1968) Bull. Chem. Soc. Jpn. **41,** Seite 142 ff.. Die so erhaltenen polymergebundenen Phosphorsäuremonoalkylester dienen als Zwischenprodukte für die weiteren Umsetzungen. Sie können auch als Kationenaustauscher verwendet werden. Die Bindung eines Nucleosidrestes, beispielsweise als Nucleosidpyrophosphorsäurediester, kann nach mehreren Verfahrensvarianten erfolgen:
a) Aus Nucleosid-5'-monophosphorsäure und Morpholin werden mit Hilfe von Dicyclohexylcarbodiimid nach J.G. Moffatt und H.G. Khorana (1961) J.Am.Chem.Soc. **83,** Seiten 649 ff. die aktivierten Nucleosid-5'-monophosphomorpholidate hergestellt und mit dem Tri-n-butylammoniumsalz des polymergebundenen Phosphorsäuremonoalkylesters in Pyridin zum polymergebundenen Nucleosidpyrophosphatdiester umgesetzt.
b) Aus Nucleosid-5'-monophosphorsäure und Morpholin werden mit Hilfe von Dicyclohexylcarbodiimid nach J.G. Moffatt und H.G. Khorana (1961) J.Am.Chem.Soc. **83,** Seiten 649 ff. die aktivierten Nucleosid-5'-monophosphomorpholidate hergestellt und in Anlehnung an G.M. Carman und S. Fischl (1980) J. Food Biochem. **3,** Seiten 89 ff, mit der freien Säure des polymergebundenen Phosphorsäuremonoalkylesters in Chloroform und 4-Dimethylaminopyridin zum polymergebundenen Nucleosidpyrophosphatdiester umgesetzt.
c) Die freie Säure des polymergebundenen Phosphorsäuremonoalkylesters wird nach H.A. Staab et al. (1959) Angew.Chem. (Int.Ed.engl.) **71,** Seiten 736 ff., mit Carbonyldiimidazol zum Phosphorsäuremonoesterimidazolid umgesetzt. Dieses wird durch Zugabe von trockenem Nucleosid-5'-monophosphorsäure-tributylammoniumsalz weiter zum polymergebundenen Nucleosidpyrophosphatdiester umgesetzt.

Nach diesen Verfahren sind typischerweise Sorbentien für die Affinitätschromatographie erhältlich, die 5 bis 20 µMol Nucleosid / g Gel (Feuchtmasse) enthalten.

Esterbindungen entstehen aus einer Säure und einem Alkohol durch Wasserabspaltung; entsprechend entstehen Pyrophosphatbindungen aus zwei Phosphorsäureverbindungen. Zu den gebräuchlichen wasserabspaltenden Mitteln gehören beispielsweise die Carbodiimide, beispielsweise Dicyclohexylcarbodiimid. Bevorzugterweise wird 1,1'-Carbonyldiimidazol für diesen Zweck benutzt. Bei anderen Verfahren der Wasserabspaltung werden aktivierte Zwischenstufen, wie z.B. Säurehalogenide oder -anhydride, eingesetzt. Die Einzelheiten derartiger Verfahren und geeignete Verfahrensvarianten sind dem Fachmann beispielsweise aus gängigen Handbüchern bekannt. Derartige Verfahrensvarianten können prinzipiell anstelle der beschriebenen Reaktionsfolgen benutzt werden.

In der Biochemie werden unter dem Begriff Nucleoside N-Glycoside der Pyrimidinbasen Thymin, Uracil und Cytosin und der Purinbasen Guanin und Adenin mit Ribose oder 2-Desoxyribose verstanden. Nucleotide sind die Phosphorsäureester dieser Nucleoside. Nucleosiddiphosphate enthalten ein weiteren Phosphorsäurerest, der durch eine Pyrophosphatbindung an den ersten Phosphorsäurerest gebunden ist. Oligonucleotide enthalten mehrere Nucleotide, die gleich oder verschieden sein können, und die durch Phosphorsäurediesterbindungen verknüpft sind. Erfindungsgemäß werden unter den Begriffen Nucleosid, Nucleotid und Oligonucleotid außerdem Verbindungen verstanden, bei denen statt der genannten Basen andere Purin- oder Pyrimidinbasen, wie z.B. Hypoxanthin, 5-Methylcytosin oder N-2-Methylguanosin enthalten sind, oder die statt der Ribose oder 2-Desoxyribose einen anderen Zuckerrest oder einen Zuckeralkohol wie Ribit enthalten. Derartige analoge Verbindungen sind dem Fachmann bekannt. In ihrer Gesamtheit werden diese Verbindungen erfindungsgemäß unter dem Begriff nucleosidhaltige Verbindungen beziehungsweise Reste zusammengefaßt. Beispiele solcher nukleosidhaltigen Verbindungen sind Adenosin, AMP, ADP, ATP, cyclo-AMP, CDP, UDP, GDP, NAD(H), NADP(H), FMN oder FAD.

Die erfindungsgemäß verwendeten Alkylendiole leiten sich von geradkettigen oder verzweigten C₂- bis C₈-Alkanen ab, wobei die Hydroxylgruppen sich in α- und ω-Stellung oder auch in der Kette befinden können. Besonders bevorzugt ist die Verwendung von n-Hexan-1,6-diol.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

Die folgenden Beispiele sollen die Erfindung näher erläutern; sie stellen keine Einschränkung des Erfindungsgedankens dar.

### Beispiel 1: Phosphorsäureester von polymergebundenem Hexandiol

### Stufe 1: Polymergebundenes Hexandiol

630 g epoxyaktiviertes Fractogel® hergestellt nach DE 43 10 964 werden in 2 I trockenem Dioxan mit 50 g Hexandiol und 70 ml Bortrifluorid-Ethylether-Komplex (Merck-Schuchardt) versetzt. Nach zweistündigem Schütteln bei Raumtemperatur wird noch zwei Stunden auf 50 °C erhitzt. Ein anschliessender Nachweis auf Epoxidgruppen ist negativ. Das Reaktionsprodukt wird abfiltriert (G3-Fritte) und mit Dioxan, kalter gesättigter wäßriger NaHCO₃-Lösung, Wasser, Methanol und Aceton gewaschen und anschliessend bei 70 °C im Vakuum getrocknet.

### Stufe 2: Phosphorsäureester des polymergebundenen Hexandiols (freie Säure)

Das getrocknete Produkt aus Stufe 1 wird in 2 I trockenem Triethylphosphat suspendiert und bei 0 °C unter Schütteln und Feuchtigkeitsausschluß langsam mit 25 ml Phosphorylchlorid versetzt. Nach 2 1/2 Stunden wird über eine Fritte abgesaugt und mit Ether, Eiswasser, Wasser und Methanol gewaschen.

### Stufe 3: Phosphorsäureester des polymergebundenen Hexandiols (Tri-n-butylammoniumsalz)

Der Rückstand wird in Methanol suspendiert und mit 50 ml tri-n-Butylamin 2 Stunden geschüttelt. Nach erneutem Absaugen und Waschen mit Methanol und Aceton wird bei 60 °C im Vakuum bis zur Gewichtskonstanz getrocknet.

Das Produkt enthielt 0,94 Gew.% P.

### Beispiel 2: Umsetzung des polymergebundenen Phosphorsäureesters aus Beispiel 1 mit Cytidin-5'-monophosphomorpholidat in Pyridin

520 g des Produktes aus Beispiel 1 (tri-n-Butylammoniumsalz) werden in 2 I trockenem Pyridin suspendiert. Anschließend werden 10 g fein gepulvertes trockenes Cytidin-5'-monophospho-morpholidat-4-morpholin-N,N'-dicyclohexylcarboxamidin zugefügt. Nach 16-stündigem Schütteln bei Raumtemperatur werden weitere 10 g des Cytidinderivates zugefügt und weiter geschüttelt. Nach weiteren 24 Stunden werden nochmals 5 g des Cytidinderivates zugefügt. Nach insgesamt 52-stündiger Reaktionszeit wird über eine Fritte abgesaugt und mit 10 I Methanol, 50 I Wasser, 15 I kalter wäßriger 1 N NaOH-Lösung, 20 I Wasser, 10 I Methanol und 50 I Wasser gewaschen. Zu dem feuchten Produkt wird Ethanol bis zu einem Gehalt von 20 Vol-% Ethanol zugefügt.

Der Gehalt an CDP beträgt 15 µMol/g Feuchtmasse.

### Beispiel 3: Umsetzung des polymergebundenen Phosphorsäureesters aus Beispiel 1 mit Cytidin-5'-monophosphomorpholidat mit 4-Dimethylaminopyridin

7 g des Produktes aus Beispiel 1 (tri-n-Butylammoniumsalz) werden in 100 ml wasserfreiem Chloroform suspendiert. Anschließend werden 1,1 g 4-Dimethylaminopyridin und 1 mMol trockenes Cytidin-5'-monophosphomorpholidat?-4-morpholin-N,N'-dicyclohexylcarboxamidin? zugefügt. Man erwärmt unter Feuchtigkeitsausschluß auf 40 °C; nach drei Tagen Reaktionszeit wird das Reaktionsprodukt über eine Fritte abgesaugt und mit Chloroform, Methanol, Wasser, 1 N NaOH und Wasser gewaschen.

Der Gehalt an CDP beträgt 15 µMol/g Feuchtmasse.

### Beispiel 4: Umsetzung des polymergebundenen Phosphorsäureesters aus Beispiel 1 mit Cytidin-5'-monophosphorsäure (tri-n-Butylammoniumsalz) und Carbonyldiimidazol

5,5 g des Produktes aus Beispiel 1 (freie Säure) werden in 50 ml wasserfreiem Dimethylformamid suspendiert und mit 490 mg Carbonyldiimidazol versetzt. Nach 5 Stunden wird der Überschuß an Carbonyldiimidazol mit 50 µl Methanol zersetzt. Nach einer Stunde wird das entstandene CO₂ und der Überschuß an Methanol im Vakuum entfernt und 250 mg trockenes Cytidin-5'-monophosphat-tri-n-butylammoniumsalz zugefügt. Nach zwölf Stunden Reaktionszeit wird das Reaktionsprodukt über eine Fritte abgesaugt und mit Methanol, Wasser, und bei 8 °C mit 0,5 I 1 N NaOH und mit 5 I Wasser gewaschen.

Man erhält 12 g polymergebundenes CDP mit einem Gehalt von 16 µMol CDP/g Feuchtgewicht.

### Beispiele 5-7: Umsetzung des polymergebundenen Phosphorsäureesters aus Beispiel 1 mit Uridin-5'-monophosphorsäure

Die Beispiele 2 - 4 werden mit der jeweiligen Uridin-5'-monophosphorsäureverbindung anstelle der Cytidin-5'-monophosphorsäureverbindung wiederholt. Es werden 15 - 20 µMol UDP/g Feuchtmasse gebunden.

### Beispiele 8-10: Umsetzung des polymergebundenen Phosphorsäureesters aus Beispiel 1 mit Guanosin-5'-monophosphorsäure

Die Beispiele 2 - 4 werden mit der jeweiligen Guanosin-5'-monophosphorsäureverbindung anstelle der Cytidin-5'-monophosphorsäureverbindung wiederholt. Es werden 15 - 20 µMol GDP/g Feuchtmasse gebunden.

### Vergleichsbeispiel A: Stabilität eines erfindungsgemäßen CDP - Sorbens mit einem CDP -Sorbens aus dem Stand der Technik (WO 95/09 694)

Erfindungsgemäßes CDP-Sorbens hergestellt nach Beispiel 3 (Versuch E) wird als wäßrige Suspension in eine SUPERFORMANCE Säule (10 * 50 mm; Bettlänge ca. 3 cm) gefüllt. Ebenso wird eine zweite Säule mit CDP-Sorbens hergestellt nach Beispiel 4 aus WO 95/09 694 gefüllt (Versuch V). Bei 4 °C wird 1 M wäßrige NaOH-Lösung durch die Säulen gepumpt und im Eluat die UV-Absorption bei 267 nm gemessen. Dabei beobachtet man bei Versuch V innerhalb weniger Minuten einen starken Anstieg der UV-Absorption; anschließend wurde festgestellt, daß das Sorbens kein CDP mehr enthielt. Bei Versuch E wurde auch im Verlauf von mehreren Stunden kein UV-absorbierendes Material eluiert; das Sorbens enthielt CDP.

## Patentansprüche

1. Trennmaterial für die Affinitätschromatographie auf der Grundlage von hydroxylgruppenhaltigen Basisträgern, auf deren Oberflächen Polymere kovalent gebunden sind, wobei
a) der Basisträger aliphatische Hydroxylgruppen enthält,
b) die kovalentgebundenen Polymeren über eine endständige Monomereinheit an den Basisträger gebunden sind,
**dadurch gekennzeichnet, daß** die linearen Polymeren Monomereinheiten der Formel I enthalten, 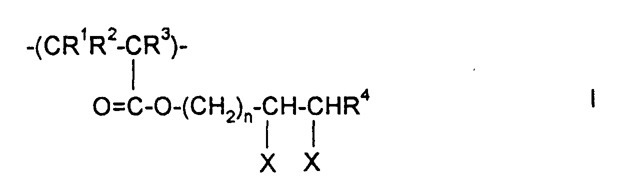 worin
R¹, R² und R³ unabhängig voneinander H oder CH₃,
R⁴ H, C₁-C₅-Alkyl oder C₆-C₁₂-Aryl,
n eine ganze Zahl zwischen 1 und 5
und
einer der Reste X OH und der andere Rest X einen nucleosidhaltigen Rest, der über eine gerade oder verzweigte C₂ - C₈ - Alkylengruppe gebunden ist,
bedeuten.

2. Trennmaterial nach Anspruch 1, **dadurch gekennzeichnet, daß** der nucleosidhaltige Rest, der an eine Alkylengruppe gebunden vorliegt, einen Rest nach Formel II bedeutet.

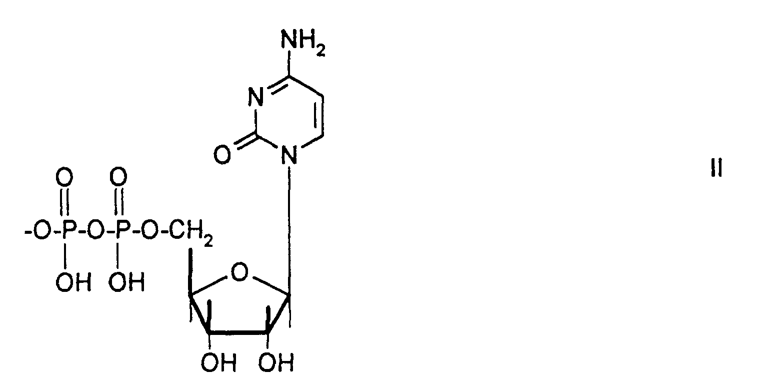

3. Trennmaterial nach Anspruch 1, **dadurch gekennzeichnet, daß** der nucleosidhaltige Rest, der an eine Alkylengruppe gebunden vorliegt, einen Rest nach Formel III bedeutet.

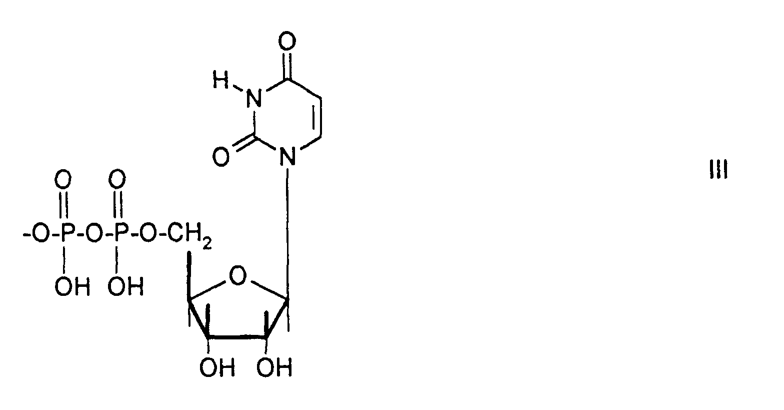

4. Trennmaterial nach Anspruch 1, **dadurch gekennzeichnet, daß** der nucleosidhaltige Rest, der an eine Alkylengruppe gebunden vorliegt, einen Rest nach-Formel IV bedeutet.

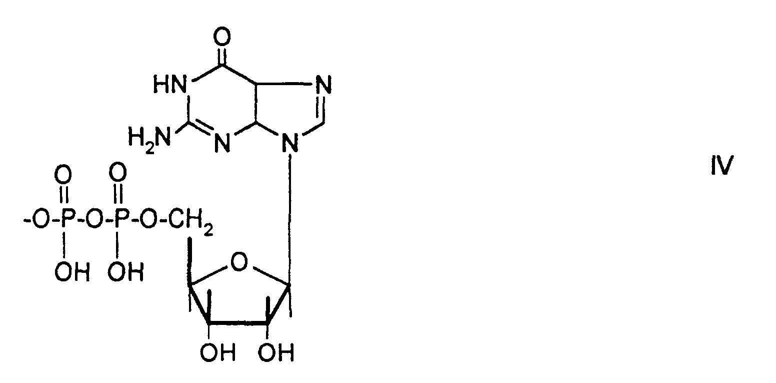

5. Verwendung von Trennmaterialien mit den Merkmalen eines der Ansprüche 1 - 4 für die Affinitätschromatographie.

6. Verfahren zur Herstellung eines Sorbens mit den Merkmalen eines der Ansprüche 1 - 4, **gekennzeichnet durch** folgende Verfahrensschritte:
a) Pfropfpolymerisation von Monomeren der Formel V auf einen hydroxylgruppenhaltigen Basisträger unter Beteiligung von Cer-(IV)-lonen, 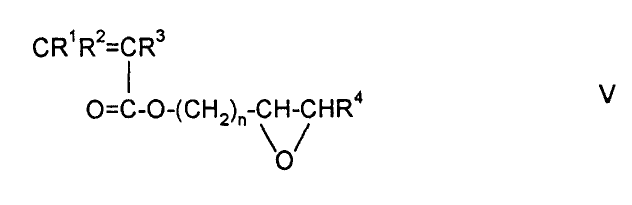 worin
R¹, R² und R³ unabhängig voneinander H oder CH₃,
R⁴ H, C₁-C₅-Alkyl oder C₆-C₁₂-Aryl
und
n eine ganze Zahl zwischen 1 und 5
bedeuten.
b) Umsetzung des epoxidgruppenhaltigen Trägers aus Verfahrensschritt a) mit einem Alkylendiol;
c) Phosphorylierung der Hydroxylgruppe, die in Verfahrensschritt b) eingeführt wurde;
d) Einführung von nukleosidhaltigen Resten in das in Schritt c) erhaltene Produkt.

7. Phosphorsäureesterderivat eines gepfropften Polymeren auf der Grundlage von hydroxylgruppenhaltigen Basisträgern, auf deren Oberflächen Polymere kovalent gebunden sind, wobei
a) der Basisträger aliphatische Hydroxylgruppen enthält,
b) die kovalentgebundenen Polymeren über eine endständige Monomereinheit an den Basisträger gebunden sind,
**dadurch gekennzeichnet, daß** die linearen Polymeren Monomereinheiten der Formel VI enthalten, 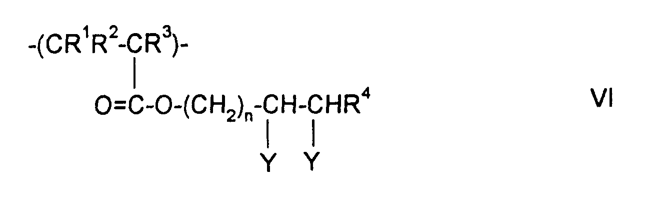 worin
R¹, R² und R³ unabhängig voneinander H oder CH₃,
R⁴ H, C₁-C₅-Alkyl oder C₆-C₁₂-Aryl,
n eine ganze Zahl zwischen 1 und 5
und
einer der Reste Y OH und der andere Rest Y eine über eine Alkylengruppe gebundene PO₄H₂ -Gruppe bedeuten.

8. Verwendung eines Phosphorsäureesterderivates nach Anspruch 7 für die Herstellung eines Sorbens nach einem der Ansprüche 1 - 4.

9. Verwendung eines Phosphorsäureesterderivates nach Anspruch 7 als Kationenaustauscher für die Flüssigkeitschromatographie.

## Claims

1. Separation material for affinity chromatography on the basis of hydroxyl-containing base supports to whose surfaces polymers are covalently bonded,
a) the base support comprising aliphatic hydroxyl groups and
b) the covalently bonded polymers being attached to the base support via a terminal monomer unit,
**characterized in that** the linear polymers comprise monomer units of the formula I 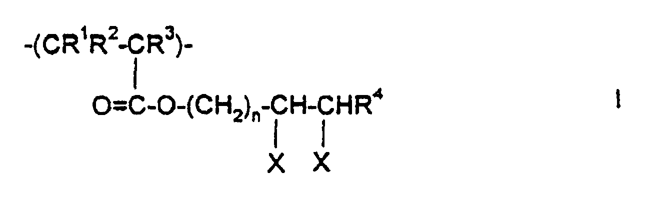 in which
R¹, R² and R³ independently of one another are H or CH₃,
R⁴ is H, C₁-C₅-alkyl or C₆-C₁₂-aryl,
n is an integer between 1 and 5
and
one of the radicals X is OH and the other radical X is a nucleoside-containing radical which is attached via a straight or branched C₂-C₈-alkylene group.

2. Separation material according to Claim 1, **characterized in that** the nucleoside-containing radical which is present attached to an alkylene group is a radical of formula II.

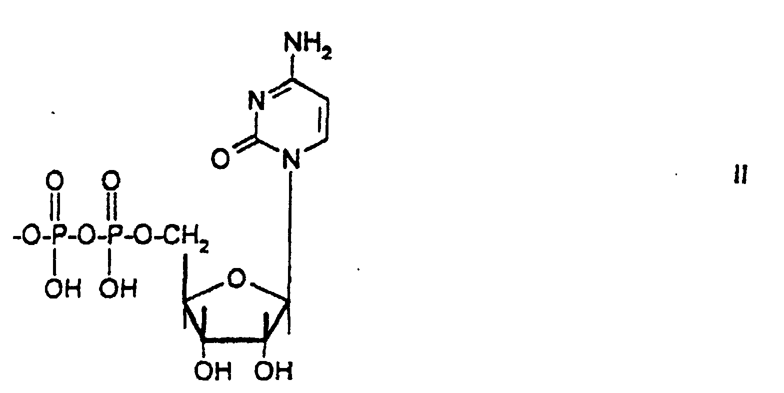

3. Separation material according to Claim 1, **characterized in that** the nucleoside-containing radical which is present attached to an alkylene group is a radical of formula III.

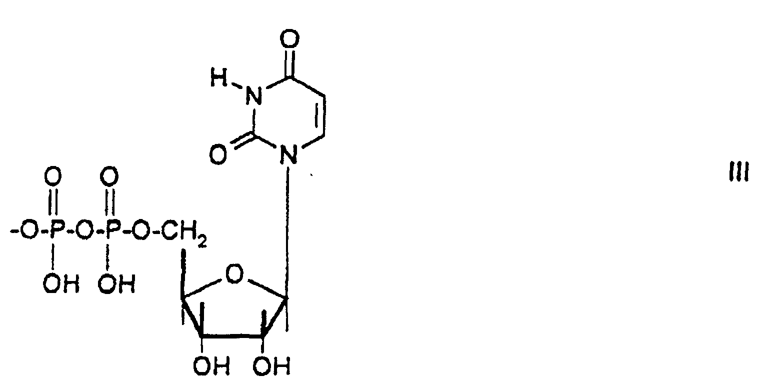

4. Separation material according to Claim 1, **characterized in that** the nucleoside-containing radical which is present attached to an alkylene group is a radical of formula IV.

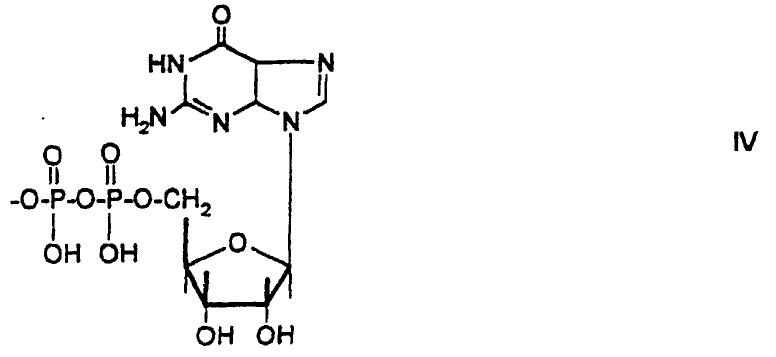

5. Use of separation materials having the features of one of Claims 1-4 for affinity chromatography.

6. Process for preparing a sorbent having the features of one of Claims 1-4, **characterized by** the following steps:
a) graft polymerization of monomers of the formula V onto a hydroxyl-containing base support, with the participation of cerium(IV) ions, 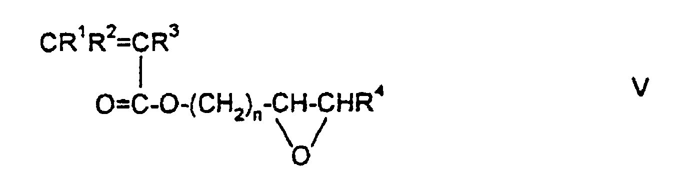 in which
R¹, R² and R³ independently of one another are H or CH₃,
R⁴ is H, C₁-C₅-alkyl or C₆-C₁₂-aryl,
and
n is an integer between 1 and 5;
b) reaction of the epoxy-containing support from step a) with an alkylene diol;
c) phosphorylation of the hydroxyl group introduced in step b); and
d) introduction of nucleoside-containing radicals into the product obtained in step c).

7. Phosphoric ester derivative of a grafted polymer on the basis of hydroxyl-containing base supports to whose surfaces polymers are covalently bonded,
a) the base support comprising aliphatic hydroxyl groups and
b) the covalently bonded polymers being attached to the base support via a terminal monomer unit,
**characterized in that** the linear polymers comprise monomer units of the formula VI 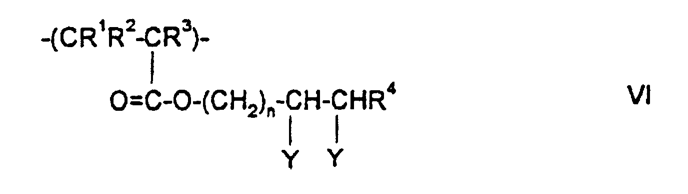 in which
R¹, R² and R³ independently of one another are H or CH₃,
R⁴ is H, C₁-C₅-alkyl or C₆-C₁₂-aryl,
n is an integer between 1 and 5
and
one of the radicals Y is OH and the other radical Y is a PO₄H₂ group attached via an alkylene group.

8. Use of a phosphoric ester derivative according to Claim 7 for the preparation of a sorbent according to one of Claims 1-4.

9. Use of a phosphoric ester derivative according to Claim 7 as a cation exchanger for liquid chromatography.

## Revendications

1. Matériau de séparation pour la chromatographie d'affinité, à base de supports de base contenant des groupes hydroxy, à la surface desquels sont fixés par liaison covalente des polymères,
a) le support de base comportant des groupes hydroxy aliphatiques,
b) les polymères fixés par liaison covalente étant liés au support de base par l'intermédiaire d'un motif monomère en bout de chaîne,
**caractérisé en ce que** les polymères linéaires contiennent des motifs monomères de formule I, 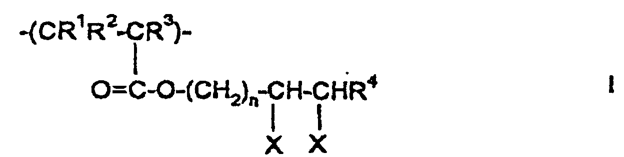 dans laquelle
R¹, R² et R³ représentent, indépendamment les uns des autres, H ou CH₃,
R⁴ représente H ou un groupe alkyle en C₁-C₅ ou aryle en C₆-C₁₂,
n est un nombre entier compris entre 1 et 5
et
l'un des radicaux X représente OH et l'autre radical X représente un radical contenant un nucléoside, qui est relié par l'intermédiaire d'un groupe alkylène en C₂-C₈ linéaire ou ramifié,

2. Matériau de support selon la revendication 1, **caractérisé en ce que** le radical contenant un nucléoside, qui se trouve lié à un groupe alkylène, représente un radical de formule II

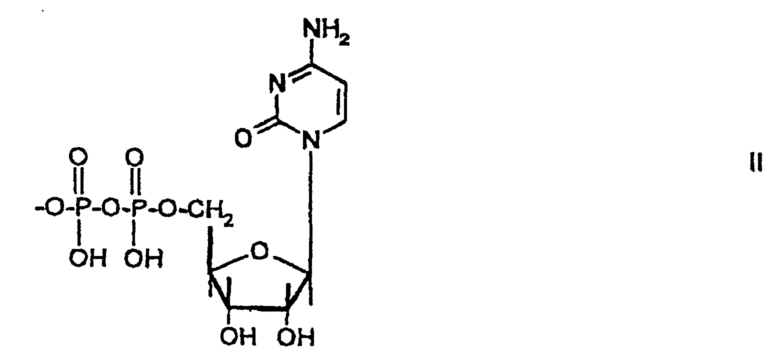

3. Matériau de support selon la revendication 1, **caractérisé en ce que** le radical contenant un nucléoside, qui se trouve lié à un groupe alkylène, représente un radical de formule III

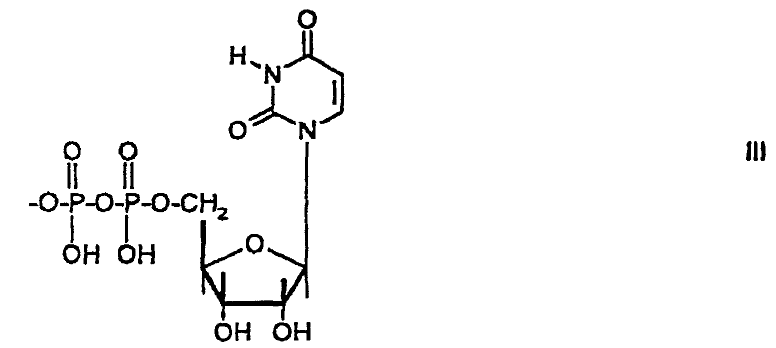

4. Matériau de support selon la revendication 1, **caractérisé en ce que** le radical contenant un nucléoside, qui se trouve lié à un groupe alkylène, représente un radical de formule IV

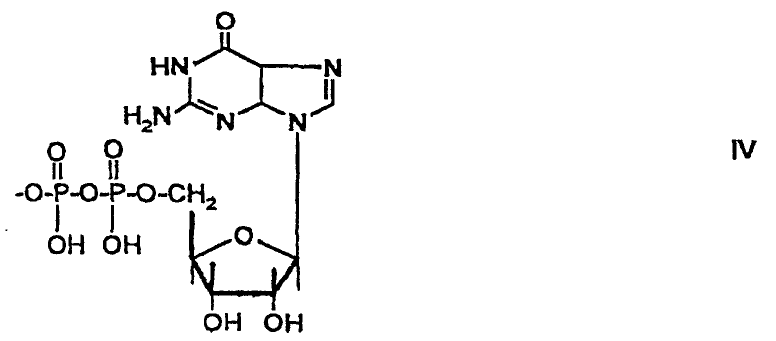

5. Utilisation de matériaux de séparation ayant les caractéristiques de l'une des revendications 1-4, pour la chromatographie d'affinité.

6. Procédé pour la préparation d'un sorbant ayant les caractéristiques de l'une des revendications 1-4, **caractérisé par** les étapes suivantes de processus :
a) polymérisation par greffage de monomères de formule V sur un support de base comportant des groupes hydroxy, avec participation d'ions cérium-(IV), 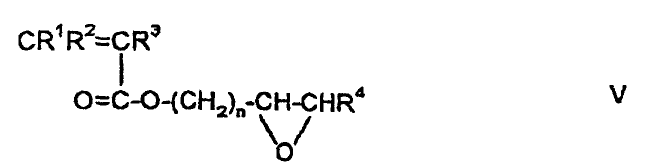 dans laquelle
R¹, R² et R³ représentent, indépendamment les uns des autres, H ou CH₃,
R⁴ représente H ou un groupe alkyle en C₁-C₅ ou aryle en C₆-C₁₂,
n est un nombre entier compris entre 1 et 5
b) réaction du support, comportant des groupes époxy, provenant de l'étape a) avec un alkylènediol ;
c) phosphorylation du groupe hydroxy qui a été introduit dans l'étape b) du processus,
d) introduction de radicaux contenant des nucléosides, dans le produit obtenu dans l'étape c).

7. Dérivé de type ester phosphorique d'un polymère greffé à base de supports de base comportant des groupes hydroxy, à la surface desquels sont fixés par liaison covalente des polymères,
a) le support de base comportant des groupes hydroxy aliphatiques,
b) les polymères fixés par liaison covalente étant liés au support de base par l'intermédiaire d'un motif monomère en bout de chaîne,
**caractérisé en ce que** les polymères linéaires contiennent des motifs monomères de formule VI, 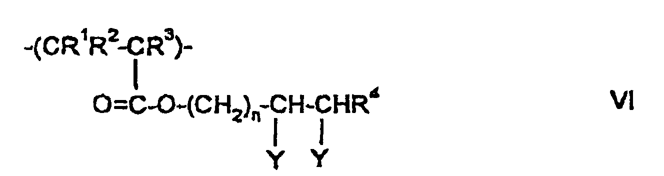 dans laquelle
R¹, R² et R³ représentent, indépendamment les uns des autres, H ou CH₃,
R⁴ représente H ou un groupe alkyle en C₁-C₅ ou aryle en C₆-C₁₂,
n est un nombre entier compris entre 1 et 5
et
l'un des radicaux Y représente OH et l'autre radical Y représente un groupe PO₄H₂ relié par l'intermédiaire d'un groupe alkylène.

8. Utilisation d'un dérivé de type ester phosphorique selon la revendication 7, pour la préparation d'un sorbant selon l'une quelconque des revendications 1 à 4.

9. Utilisation d'un dérivé de type ester phosphorique selon la revendication 7, en tant qu'échangeur de cations pour la chromatographie liquide.
